Europäisches Patentamt

European Patent Office

Office européen des brevets

(19)

(11) Veröffentlichungsnummer : **0 039 888**
**B1**

(12) **EUROPÄISCHE PATENTSCHRIFT**

(45) Veröffentlichungstag der Patentschrift :
**18.01.84**

(51) Int. Cl.³ : **B 21 D 43/28**, B 23 D 33/00

(21) Anmeldenummer : **81103404.0**

(22) Anmeldetag : **06.05.81**

(54) Verfahren und Einrichtung zum Abtrennen und Abfördern von Gruppen von Profilstäben verschiedener Querschnittsform bzw. Querschnittsgrösse hinter eine Kaltschere.

(30) Priorität : **14.05.80 DE 3018425**

(43) Veröffentlichungstag der Anmeldung :
**18.11.81 Patentblatt 81/46**

(45) Bekanntmachung des Hinweises auf die Patenterteilung : **18.01.84 Patentblatt 84/03**

(84) Benannte Vertragsstaaten :
**DE FR GB IT**

(56) Entgegenhaltungen :
**DE-A- 1 652 760**
**DE-A- 2 427 810**
**DE-A- 2 805 572**
**DE-U- 1 905 476**

(73) Patentinhaber : **SMS SCHLOEMANN-SIEMAG AKTIENGESELLSCHAFT**
**Steinstrasse 13**
**D-4000 Düsseldorf 1 (DE)**

(72) Erfinder : **Berz, Gerhard**
**Corneliusstrasse 71**
**D-4000 Düsseldorf (DE)**

(74) Vertreter : **Pollmeier, Felix et al**
**Patentanwälte Hemmerich-Müller-Grosse-Pollmeier**
**Berliner Allee 41**
**D-4000 Düsseldorf 1 (DE)**

EP 0 039 888 B1

## Verfahren und Einrichtung zum Abtrennen und Abfördern von Gruppen von Profilstäben verschiedener Querschnittsform bzw. Querschnittsgröße hinter einer Kaltschere

Die Erfindung betrifft ein Verfahren und eine Einrichtung zum Abtrennen und Abfördern von Gruppen von Profilstäben verschiedener Querschnittsform bzw. Querschnittsgröße hinter einer Kaltschere mit einem nachgeordneten Scherenvorstoß, wobei die auf einer Zuförderebene sich abstützenden, von einem heb- und senkbaren Obermesser abgetrennten Gruppen von Profilstäben quer zur Zuförderlinie abgefördert werden.

Nach einem aus der Praxis bekannten Stand der Technik werden die von der Kaltschere abgetrennten Gruppen von Profilstäben als Teil- oder Handelslängen direkt hinter der Kaltschere mittels heb- und senkbarer Kettenförderer von dem hinter der Kaltschere befindlichen Förderrollgang abgehoben und wahlweise nach einer oder nach beiden Seiten quer zur Zuförderlinie abgefördert.

Weiter wird zum Stand der Technik auf die DE-A-16 52 760 verwiesen, durch welche bereits bekannt ist, im Anschluß an eine Kaltschere eine heb- und senkbare Förderlinie anzuordnen.

Auch ist durch die DE-U-19 05 476 bei einem Pallettenstetigförderer bereits vorgeschlagen worden, die Querförderlinie gegenüber einer Zuförderlinie heb- und senkbar auszubilden.

Zum Schneiden der Gruppen von Profilstäben werden üblicherweise Dach-, Schräg- oder stufenförmige Messer verwendet. Kleine Rund- und Flachquerschnitte werden mit glatten Messern geschnitten, während für dicke Rundabmessungen (> 20 mn $\emptyset$) und für Profilquerschnitte profilierte Messer verwendet werden.

Der Teilschnitt erfolgt mit dem heb- und senkbar ausgebildeten Obermesser gegenüber einem feststehenden Untermesser. Um ein Quetschen bzw. Verbiegen der Profilstäbe beim Schnittvorgang zu vermeiden, wurde der vordere Teil des der Kaltschere nachgeordneten Förderrollgangs auch bereits als Wippe ausgebildet, so daß die schnittseitigen Enden der Teillängen beim Teilschnitt nach unten ausweichen können. Das Abtragen der abgetrennten Gruppe von Profilstäben erfolgt mittels heb- und senkbarer Kettenförderer, d. h., die Gruppe von Profilstäben wird von dem der Kaltschere nachgeordneten Förderrollgang abgehoben und quergefördert.

Bei kleinen Profilstäben mit Rund- bzw. Flachprofilabmessungen, die mit glatten Messern geschnitten werden, bereitet das Anheben und Querfördern der Gruppen von Profilstäben keine Schwierigkeiten. Bei dickeren Rundstäben sowie Profilquerschnitten, welche mit Profilmessern geschnitten werden, wird das Anheben und Querfördern, insbesondere bei größeren Messerlängen, schwierig. Durch das Dach- bzw. Schrägmesser oder stufenförmige Messer und durch die wegen der Größe des Scherenhubes bedingte Messeröffnung können die Profilstäbe infolge Anhebens der Kettenförderer beim Austragen im oberen Scherenmesser hängenbleiben.

Um dieses zu vermeiden, müssen die Gruppen von abgetrennten Profilstäben nach dem Schnitt zunächst aus dem Bereich der Scherenmesser vorgefördert werden, wozu das Anheben des Vorstoßschildes erforderlich ist, um anschließend vom Kettenförderer angehoben und quergefördert zu werden. Eine solche Arbeitsweise hat jedoch zusätzliche Pausenzeiten beim Unterteilen der Gruppen von Profilstäben zur Folge, wodurch die volle Durchsatzleistung der Kaltschere nicht ausgenutzt werden kann, so daß Engpässe im Arbeitsablauf und eine Produktionsminderung daraus resultieren.

Aufgabe der Erfindung ist, die Nachteile bisher bekannter Einrichtungen zu beheben, indem der Abtransport der geschnittenen Profilstabgruppe störungsfrei und unter optimalem Durchsatz erfolgt, sowie den Hub des Obermessers der Kaltschere unter Berücksichtigung des größten zu unterteilenden Profilquerschnittes so gering wie möglich auszubilden.

Zur Lösung der gestellten Aufgabe wird ein Verfahren zum Abtrennen und Abfördern von Gruppen von Profilstäben verschiedener Querschnittsform bzw. Querschnittsgröße hinter einer Kaltschere mit nachgeordnetem Scherenvorstoß vorgeschlagen, bei dem während des Teilschnittes die Gruppe von abzuteilenden Profilstäben aus der Zuförderebene bis auf das Niveau der Querförderlinie abgesenkt und nach Freiwerden der heb- und senkbaren Auflageebene diese wieder in die Ausgangsposition angehoben wird.

In weiterer Ausbildung des Verfahrens wird während des Teilschnittes die Gruppe von abzuteilenden Profilstäben aus der Zuförderebene zunächst um einen Teilhub bis unter die Schnittebene und nach dem Teilschnitt weiter bis auf das Niveau der Querförderlinie abgesenkt.

Die Einrichtung zur Durchführung des Verfahrens ist dadurch gekennzeichnet, daß die Querfördereinrichtung ortsfest und mit ihrer Förderebene unterhalb der Zuförderebene des der Kaltschere nachgeordneten Förderrollgangs angeordnet und der Förderrollgang direkt oder stufenweise bis unter die Förderebene der Querfördereinrichtung absenkbar ausgebildet ist.

Der Förderrollgang hinter der Kaltschere ist in zwei oder mehr miteinander wahlweise kuppelbare heb- und senkbare Rollgangsabschnitte unterteilt. An dem abförderseitigen Ende der Querfördereinrichtung sind Sammelmulden oder Bindestationen angeordnet.

Vorteil eines derartigen Verfahrens bzw. einer derartigen Einrichtung zum Abtrennen und Abfördern von Gruppen von Profilen ist, daß die abzuteilenden bzw. abgeteilten Gruppen von Profilstäben bereits frühzeitig aus dem Bereich des oberen Profilmessers der Kaltschere nach unten abgesenkt werden und somit diese nicht beim Quertransport mit ihren scherenseitigen Enden hängenbleiben können, so daß Störungen beim Abtransport der abgetrennten Gruppe von Profilstäben, insbesondere bei größeren Profilquerschnitten, mit Sicherheit vermieden werden. Die Gefahr des Verbiegens der Enden der Teillängen im Bereich der Messer entfällt, so daß auf den Einbau einer Wippe verzichtet werden kann.

Die Absenkbewegung der abgetrennten Profilgruppe auf die Querfördereinrichtung hat den weiteren Vorteil, daß der Messerhub des Obermessers bei gleichen Profilquerschnitten verringert werden kann, so daß die Kaltschere baulich leichter und damit kostenmäßig billiger wird. Andererseits können bei gleichem Messerhub längere Messer zur Erhöhung des Durchsatzes der Kaltschere verwendet werden.

Ein Ausführungsbeispiel der Erfindung stellt die Zeichnung dar. Es zeigen

Figur 1 die Kaltschere mit nachgeordnetem Förderrollgang und Querfördereinrichtung in der Seitenansicht,

Figur 2 die dem Förderrollgang zugeordnete Querfördereinrichtung nach Fig. 1 in der Seitenansicht im Prinzip,

Figur 3 die Kaltschere mit nachgeordnetem Förderrollgang und Querfördereinrichtung nach dem Teilschnitt in der Seitenansicht und

Figur 4 die dem Förderrollgang zugeordnete Querfördereinrichtung nach Fig. 3 in der Seitenansicht im Prinzip.

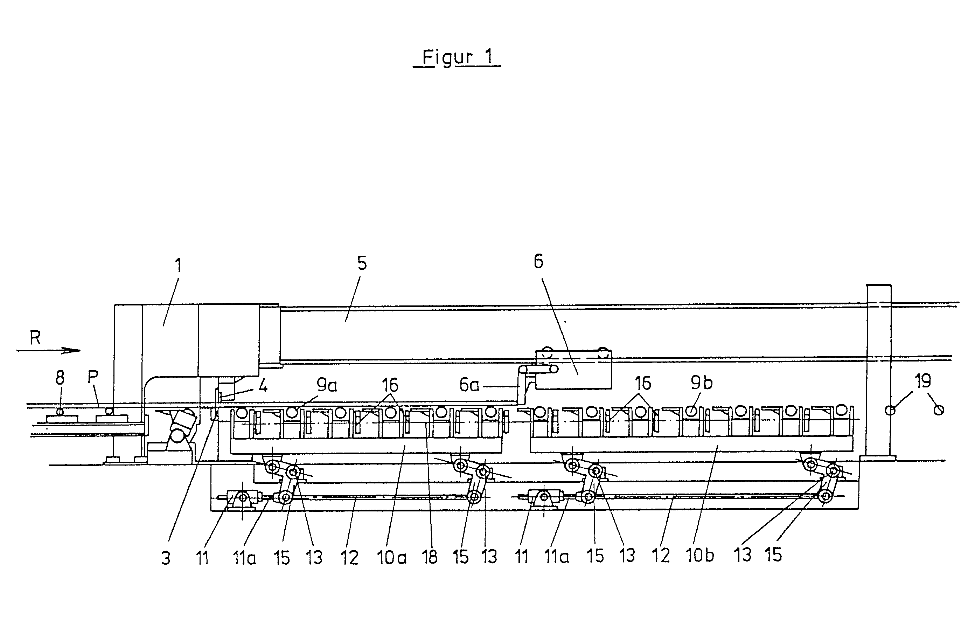

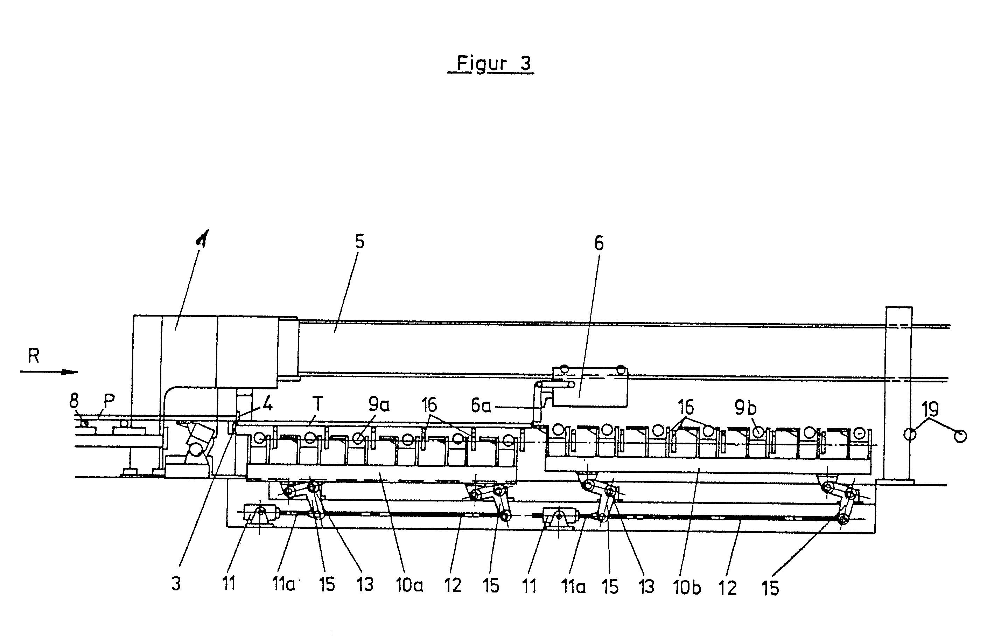

In den Fig. 1 bis 4 ist mit 1 eine Kaltschere mit feststehendem Untermesser 3 und heb- und senkbarem Obermesser 4 bezeichnet. Mit dem Ständer der Kaltschere 1 ist eine Führungsbahn 5 verbunden, längs der ein Vorstoßwagen 6 mit einem nachgiebig gelagerten Vorstoßschild 6a auf einen der gewünschten Länge der abzuteilenden Gruppe von Profilstäben P entsprechenden Abstand von der Schnittstelle der Scherenmesser 3, 4 verfahrbar ist. Die in Handels- oder Teillängen zu teilende Gruppe von Profilstäben P wird mittels eines Zuförderrollgangs in der Förderrichtung R durch die Maulöffnung der Messer 3, 4 der Kaltschere 1 über einen dieser nachgeordneten, beispielsweise in mehrere Unterabschnitte 9a, 9b unterteilten Förderrollgang bis vor das Vorstoßschild 6a bewegt. Die Rollgangsabschnitte 9a, 9b sind auf getrennten Traversen 10a, 10b heb- und senkbar gelagert. Der Hubantrieb der Rollgangsabschnitte 9a, 9b besteht jeweils aus einem Hubzylinder 11, dessen Kolbenstange 11a an ein Zuggestänge 12 angelenkt ist. An das Zuggestänge 12 sind um ortsfeste Drehachsen 13 schwenkbewegliche Winkelhebel 15, 15a angelenkt, deren freies Ende an den Traversen 10a, 10b drehbeweglich gelagert ist. Quer zur Förderrichtung R des Förderrollgangs mit den Rollgangsabschnitten 9a, 9b sind in der Rollenteilung unterhalb der Förderebene des Förderrollgangs endlos umlaufende Querfördereinrichtungen, beispielsweise Kettenförderer 16, auf ortsfesten Wellen 18 angeordnet, die ebenfalls den Rollgangsabschnitten 9a, 9b zugeordnet sind. An dem einen Ende der Kettenförderer 16 sind Sammelmulden 20 bzw. nicht weiter dargestellte Bindemaschinen angeordnet, während dem anderen Ende der Kettenförderer 16 eine weitere Querfördereinrichtung 21 möglicherweise zugeordnet ist. Die Absenkbewegung der Rollgangsabschnitte 9a bzw. 9a und 9b erfolgt über die Hubantriebe 11 abhängig von der Bewegung des Obermessers 4 beim Teilschnitt. Der Kettenförderer 16 bzw. die weitere Querfördereinrichtung 21 können zum Überfördern der Gruppen von Teillängen T auf die weitere Querfördereinrichtung 21 in an sich bekannter Weise in Richtung der Pfeile H innerhalb des Hubes der Rollgangsabschnitte 9a, 9b heb- und senkbar ausgebildet werden.

Die Betriebsweise der Anlage ist folgende :

Die Gruppe von Profilstäben P wird mittels des Zuförderrollgangs 8 in der Förderrichtung R durch das geöffnete Obermesser 4 über den Rollgangsabschnitt 9a bis vor das Vorstoßschild 6a gefahren, welches auf die gewünschte Schnittlänge der Handels- oder Teillängen T ausgerichtet ist. Sodann wird das für Profilstäbe P größerer Querschnitte als profiliertes Messer ausgebildete Obermesser 4 zum Teilschnitt gegen das feststehende Untermesser 3 bewegt. Während des Teilschnittes wird über den Hubzylinder 11 der Rollgangsabschnitt 9a bzw. 9a, 9b abgesenkt, so daß beim Öffnen des Obermessers 4 die abgetrennte Gruppe von Teillängen T auf dem Rollgangsabschnitt 9a bzw. 9a, 9b mit nach unten bewegt wird, wodurch die messerseitigen Enden aus dem Profil des Obermessers 4 der Absenkbewegung des Rollgangsabschnittes 9a folgen und anderenends die Teillängen T aus dem Bereich des Vorstoßschildes 6a nach unten abgesenkt werden (vergleiche Fig. 3). Das Absenken des Rollgangsabschnittes 9a bzw. 9a, 9b mit der Gruppe von Teillängen T kann entweder in einer durchgehenden Absenkbewegung direkt bis unter die Förderebene des Kettenförderers 16 oder stufenweise um einen Teilhub bis unter die Schnittebene und nachfolgend um einen weiteren Teilhub bis unter die Förderebene des Kettenförderers 16 erfolgen, um die Gruppe von Teillängen T vom Rollgangsabschnitt 9a bzw. 9a, 9b auf den Kettenförderer 16 abzulegen. Nachdem die Gruppe von Teillängen T auf dem Kettenförderer 16 aus dem Bereich des Rollgangsabschnittes 9a bzw. 9a, 9b seitlich quergefördert worden ist, wird der Rollgangsabschnitt 9a bzw. 9a, 9b wieder in die obere Lage angehoben, so daß mittels des Zuförderrollgangs 8 die vor den Scherenmessern 3, 4 befindliche Gruppe von Profilstäben P durch das angehobene Obermesser 4 wieder bis vor das Vorstoßschild 6a zum nächsten Teilschnitt vorgefördert werden kann.

Das vorbeschriebene Absenken der Gruppe von Teil- bzw. Handelslängen T beim Teilschnitt hat einerseits den Vorteil, daß die Teillängen T nach dem Teilschnitt mit ihren Enden gleich aus dem Bereich des als Profilmesser ausgebildeten Obermessers 4 und des Vorstoßschildes 6a nach unten abgesenkt werden, so daß ein mögliches Verklemmen der Enden der Teillängen T in dem Obermesser 4 vermieden wird und andererseits infolge der Absenkbewegung der Teillängen T nach dem Teilschnitt der Hub des Obermessers 4 verringert werden kann, d. h., die Kaltschere 1 leichter baut und damit billiger wird. Außerdem wird die Durchsatzleistung der Kaltschere infolge Verringerung der Nebenzeiten sowie die Betriebssicherheit erhöht. Auch können bei gleicher Scherenleistung längere Messer 3, 4 verwendet werden, wodurch die Anzahl der Profilstäbe P je angeförderter und zu unterteilender Gruppe von Profilstäben vergrößert wird. Darüber hinaus kann auf die bisher erforderliche Wippe hinter der Kaltschere 1 verzichtet werden.

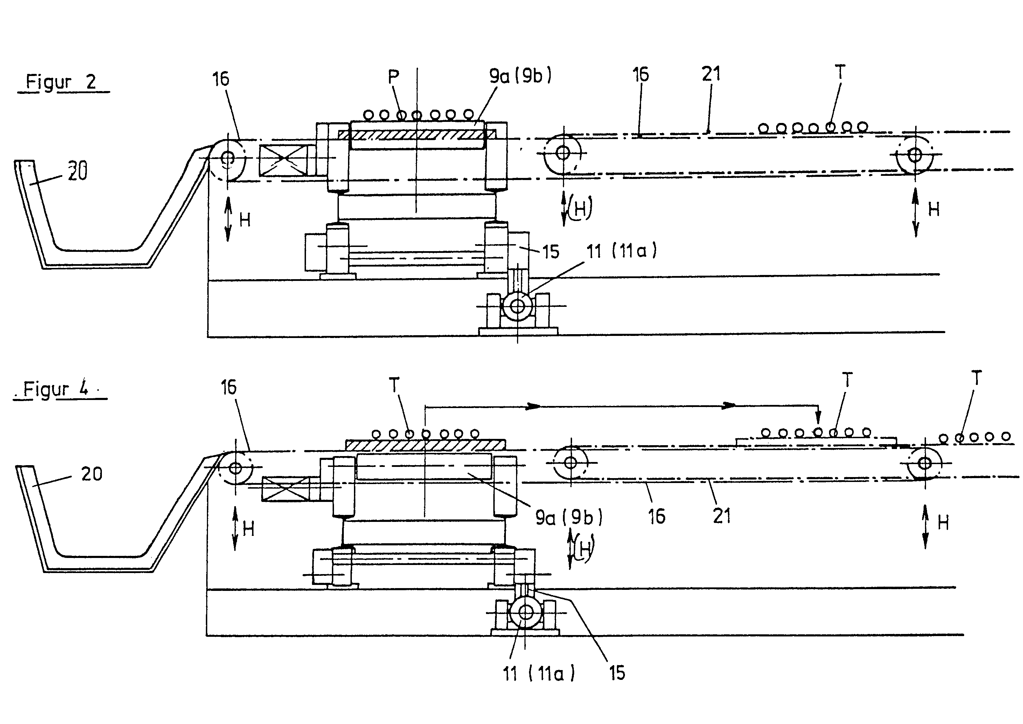

In den Fig. 2 und 4 sind die den der Kaltschere 1 nachgeordneten Rollgangsabschnitten 9a, 9b zugeordneten Querfördereinrichtungen vor und nach dem Teilschnitt in der Seitenansicht dargestellt. Das Abfördern der abgetrennten Gruppe von Teillängen T kann sowohl über eine endlose Querfördereinrichtung 16 zu Sammelmulden 20 bzw. nicht weiter dargestellten Bundbindestationen oder in der anderen Richtung über einen weiteren endlosen Querförderer 21 bzw. in der Zuförderrichtung R über einen den Rollgangsabschnitten 9a, 9b nachgeordneten Abförderrollgang 19 zu Stapelstationen erfolgen.

Der der Kaltschere 1 nachgeordnete Förderrollgang kann, wie in den Fig. 1 und 3 dargestellt, in zwei oder mehr unabhängig oder gemeinsam betätigbare Rollgangsabschnitte unterteilt werden, wodurch sich bei kurzen Gruppen von abgetrennten Teillängen T die Möglichkeit ergibt, diese erst unter Anheben des Vorstoßschildes 6a längs und dann weiter querzufördern. Auch dadurch können zur Erhöhung des Scherendurchsatzes nachteilige Pausenzeiten vermieden werden.

## Ansprüche

1. Verfahren zum Abtrennen und Abfördern von Gruppen von Profilstäben (P) verschiedener Querschnittsform bzw. Querschnittsgröße hinter einer Kaltschere (1) mit nachgeordnetem Scherenvorstoß (6a), wobei die auf einer Zuförderebene sich abstützenden, von einem heb- und senkbaren Obermesser (4) abgetrennten Gruppen von Profilstäben (P) quer zur Zuförderlinie abgefördert werden, dadurch gekennzeichnet, daß während des Teilschnittes die Gruppe von abzuteilenden Profilstäben (P) aus der Zuförderebene bis auf das Niveau der Querförderlinie abgesenkt und nach Freiwerden der heb- und senkbaren Auflageebene diese wieder in die Ausgangsposition angehoben wird.

2. Verfahren nach Anspruch 1, dadurch gekennzeichnet, daß während des Teilschnittes die Gruppe von abzuteilenden Profilstäben (P) aus der Zuförderebene zunächst um einen Teilhub bis unter die Schnittebene und nach erfolgtem Teilschnitt weiter bis auf das Niveau der Querförderlinie abgesenkt wird.

3. Einrichtung zur Durchführung des Verfahrens zum Abtrennen und Abfördern von Gruppen von Profilstäben (P) verschiedener Querschnittsform bzw. Querschnittsgröße hinter einer Kaltschere (1) mit nachgeordnetem Scherenvorstoß (6a) nach den Ansprüchen 1 oder 2, bestehend aus einer Kaltschere (1) mit beweglichem Obermesser (4) und feststehendem Untermesser (3) mit nachgeordnetem Förderrollgang und in der Rollenteilung angeordneter Querfördereinrichtung (16), dadurch gekennzeichnet, daß die ortsfeste Querfördereinrichtung (16) mit ihrer Förderebene unterhalb der Zuförderebene des der Kaltschere (1) nachgeordneten Förderrollgangs (9a, 9b) angeordnet ist, und der Förderrollgang (9a, 9b) direkt oder stufenweise bis unter die Förderebene der Querfördereinrichtung (16) absenkbar ausgebildet ist.

4. Einrichtung nach Anspruch 3, dadurch gekennzeichnet, daß der Förderrollgang in zwei oder mehr miteinander wahlweise kuppelbare heb- und senkbare Abschnitte (9a, 9b) unterteilt ist.

5. Einrichtung nach Anspruch 3, dadurch gekennzeichnet, daß den Enden der Querfördereinrichtung (16) Sammelmulden (20) oder Bundbindestationen zugeordnet sind.

6. Einrichtung nach Anspruch 3, dadurch gekennzeichnet, daß dem einen Ende der Querfördereinrichtung (16), diese überlappend, eine weitere Querfördereinrichtung (21) zugeordnet ist.

7. Einrichtung nach einem der vorhergehenden Ansprüche, dadurch gekennzeichnet, daß den Abschnitten (9a, 9b) des Förderrollgangs in der Förderrichtung (R) ein Abförderrollgang (19) nachgeordnet ist.

## Claims

1. A method of severing and discharging groups of profiled rods (P) of varying cross-section of transverse dimensions downstream of a cold shear (1) with a shear gauge (6a) disposed downstream, the groups of profiled rods (P), which are supported on a conveying plane and severed by an upper blade (4) which can be raised and lowered, being discharged transversely to the conveying line, characterized in that during the part cutting the group of profiled rods (P) to be separated is lowered from the conveying plane as far as the level of the transverse conveying line, and after the supporting plane which can be raised and lowered is free it is raised again to the starting position.

2. A method according to Claim 1, characterized in that during the part cutting the group of profiled rods (P) to be separated is first lowered from the conveying plane by a partial stroke to below the cutting plane and after part cutting has been completed is lowered further to the level of the transverse conveying line.

3. A device for performing the method of severing and discharging groups of profiled rods (P) of varying cross-section or transverse dimensions downstream of a cold shear (1) with a shear gauge (6a) disposed downstream according to Claim 1 or 2, comprising a cold shear (1) with a movable upper blade (4) and a stationary lower blade (3) with a conveying roller table disposed downstream and a transverse conveying device (16) disposed in the roller spacing, characterized in that the conveying plane of the stationary transverse conveying device (16) is disposed below the conveying plane of the conveying roller table (9a, 9b) disposed downstream of the cold shear (1), and the conveying roller table (9a, 9b) is designed in such a way that it can be lowered directly or in stages to below the conveying plane of the transverse conveying device (16).

4. A device according to Claim 3, characterized in that the conveying roller table is subdivided into two or more portions (9a, 9b) which can be raised and lowered and which may optionally be connected together.

5. A device according to Claim 3, characterized in that collecting throughs (20) or binding stations are associated with the ends of the transverse conveying device (16).

6. A device according to Claim 3, characterized in that a further transverse conveying device (21) is associated with one end of the transverse conveying device (16) and overlaps it.

7. A device according to any one of the preceding Claims, characterized in that a discharge roller table (19) is disposed downstream of the portions (9a, 9b) of the conveying roller table in the conveying direction (R).

**Revendications**

1. Procédé pour tronçonner et évacuer des groupes de profilés (P) de différentes formes et dimensions de section derrière une cisaille à froid (1) comportant une butée en aval (6a), les groupes de profilés (P), reposant dans le plan d'amenée et tronçonnés par un couteau supérieur (4) animé d'un mouvement de montée et descente, étant évacués perpendiculairement à la ligne d'amenée, caractérisé en ce que pendant la coupe, le groupe de profilés (P) à tronçonner est abaissé depuis le plan d'amenée jusqu'au niveau de la ligne d'évacuation transversale ; et en ce qu'après libération du plan d'appui, animé d'un mouvement de montée et de descente, ce plan soit à nouveau relevé à sa position de départ.

2. Procédé selon la revendication 1, caractérisé en ce que pendant la coupe le groupe de profilés (P) à tronçonner est tout d'abord abaissé, depuis le plan d'amenée, d'une course partielle, jusqu'en dessous du plan de coupe, puis, la coupe effectuée, est à nouveau abaissé jusqu'au niveau de la ligne d'évacuation transversale.

3. Dispositif pour l'exécution du procédé de tronçonnage et d'évacuation de groupes de profilés (P) de différentes formes et différentes tailles de section derrière une cisaille à froid (1) comportant une butée disposée en aval (6a), selon les revendications 1 ou 2, constitué d'une cisaille à froid (1) comportant un couteau supérieur mobile (4) et un couteau inférieur fixe (3) avec transporteur à rouleaux disposé en aval et avec un dispositif d'évacuation transversale (16) disposé dans la distribution des rouleaux, caractérisé en ce que le dispositif fixe d'évacuation transversale (16) est disposé avec son plan de transport en dessous du plan d'amenée du transporteur à rouleaux (9a, 9b) disposé en aval de la cisaille à froid (1) ; et en ce que le transporteur à rouleaux (9a, 9b) est conçu de façon à pouvoir s'abaisser directement ou par degrés jusqu'en dessous du plan de transport du dispositif d'évacuation transversale (16).

4. Dispositif selon la revendication 3, caractérisé en ce que le transporteur à rouleaux est divisé en deux ou plus tronçons (9a, 9b), qui peuvent être animés d'un mouvement de montée et descente et qui peuvent être à volonté couplés entre eux.

5. Dispositif selon la revendication 3, caractérisé en ce que des goulottes de collecte (20) ou des postes d'empaquetage correspondent aux extrémités du dispositif d'évacuation transversale (16).

6. Dispositif selon la revendication 3, caractérisé en ce qu'à l'une des extrémités du dispositif d'évacuation transversale (16) et chevauchant celle-ci, correspond un autre dispositif d'évacuation transversale (21).

7. Dispositif selon l'une des revendications précédentes caractérisé en ce qu'en aval des tronçons (9a, 9b) du transporteur à rouleaux, dans la direction de transport (R), est disposé un transporteur à rouleaux d'évacuation (19).

Figur 1

Figur 3

Figur 2

Figur 4

0 039 888